## Europäisches Patentamt

## European Patent Office

## Office européen des brevets

(19)

(11) Veröffentlichungsnummer: **0 066 676**
**B1**

(12) **EUROPÄISCHE PATENTSCHRIFT**

(45) Veröffentlichungstag der Patentschrift:
**06.03.85**

(51) Int. Cl.⁴ **B 01 J 31/06,** H 01 M 10/52,
B 01 J 37/00

(21) Anmeldenummer: **82101986.6**

(22) Anmeldetag: **12.03.82**

(54) **Hydrophober Katalysator für Rekombinatoren.**

(30) Priorität: **06.06.81 DE 3122659**

(43) Veröffentlichungstag der Anmeldung:
**15.12.82 Patentblatt 82/50**

(45) Bekanntmachung des Hinweises auf die Patenterteilung:
**06.03.85 Patentblatt 85/10**

(84) Benannte Vertragsstaaten:
**AT CH FR GB LI NL SE**

(56) Entgegenhaltungen:
**EP - A - 0 037 953**
**DE - A - 1 943 183**
**DE - A - 2 340 945**
**FR - A - 1 462 781**
**FR - A - 2 450 121**
**GB - A - 2 060 593**
**US - A - 3 258 360**
**US - A - 3 531 329**
**US - A - 4 175 055**

**CHEMICAL ABSTRACTS, Band 83, Nr. 20, 17. November
1975, Seite 167, Nr. 166871v, Columbus, Ohio, USA**

(73) Patentinhaber: **VARTA Batterie Aktiengesellschaft, Am
Leineufer 51, D-3000 Hannover 21 (DE)**

(72) Erfinder: **Georg, Karl, Alteburgweg 10,
D-6238 Hofheim-Lorsbach (DE)**
Erfinder: **Hoffmann, Bernd, Hochenbergstrasse 11,
D-6200 Wiesbaden 66 (DE)**

(74) Vertreter: **Kaiser, Dieter Ralf, Dipl.-Ing.,
Gundelhardtstrasse 72, D-6233 Kelkheim/Ts. (DE)**

## Beschreibung

Die Erfindung betrifft einen Katalysator zur Rekombination von Wasserstoff und Sauerstoff, insbesondere zur Rekombination der beim Betrieb elektrischer Akkumulatoren entstehenden Gase, bestehend aus einer Mischung von Polytetrafluoräthylen und Aktivkohle als Katalysatorträgermaterial, die mit einem aktiven katalytischen Material versehen ist.

Der wartungsarme Betrieb moderner Akkumulatoren wird im wesentlichen durch effiziente Rekombinatoren für die sowohl beim Laden als auch während Standzeiten und bei der Entladung anfallenden Wasserstoff- und Sauerstoffgase ermöglicht. Die Rekombinatoren sind gewöhnlich auf dem Deckel des Batteriegehäuses über einer Belüftungsöffnung angeordnet oder zweckmäßig direkt in den Verschlußstopfen integriert.

Für die einwandfreie Funktion des Rekombinators ist nicht allein die Auswahl eines geeigneten aktiven katalytischen Materials — hier hat sich im allgemeinen Palladium bewährt — wichtig, sondern es muß außerdem eine für lange Zeit anhaltende Aktivität dieses Materials gewährleistet sein. Aus diesem Grunde erhält auch die Qualität des Katalysatorträgers entscheidende Bedeutung. Dieser sollte dem Gas eine möglichst große Oberfläche darbieten bzw. hochporös sein, andererseits einer Benetzung durch kondensierende Flüssigkeit widerstehen. Eine weitere selbstverständliche Forderung an den Katalysatorträger ist Unanfälligkeit gegen chemische Korrosion.

Als Katalysatorträger sind sowohl mineralische Stoffe als auch Aktivkohle im Gebrauch. Gemäß DE-Offenlegungsschrift 2 340 945 ist der mineralische Träger beispielsweise Asbest, gemäß EP-A-0 037 953 Kieselgur. Nach US-Patentschrift 4 175 055 ist es bekannt, bereits platiniertes Kohlepulver mit einem hydrophoben Polymer, z. B. Polytetrafluorethylen (PTFE), zu mischen und das Gemisch auf eine Unterlage aus hydrophobiertem Kohlepapier aufzusintern. Die Präparierung der Aktivkohle mit einem Edelmetall, noch ehe sie durch Zumischen des Polymers hydrophobe Eigenschaften erhält, kann nach dem Vorbild der GB-Patentschrift 1 471 307 erfolgen, wonach die Aktivkohle mit PdCl$_2$-Lösung getränkt und darauf der Einwirkung einer Hydrazinlösung ausgesetzt wird, wobei sich metallisches Pd in feinster Verteilung ausscheidet. Es ist aber auch bekannt, z. B. aus der US-Patentschrift 3 531 329, ein Edelmetallsalz auf einen Kohleträger aufzubringen, nachdem dieser bereits mit einem Kunststoff gebunden und zu einer Elektrode geformt ist.

Erfahrungsgemäß läßt die Dauerhaftigkeit der Hydrophobierung oft zu wünschen übrig, wenn die Reduktion des Palladiumsalzes wie in der bekannten Weise in einem flüssigen, im allgemeinen Netzmittel enthaltenden Medium geschieht, welches vor der Weiterverarbeitung der Aktivkohle erst gründlich ausgewaschen werden muß. Einer Benetzung wird auf diese Weise schon vor dem eigentlichen Einsatz des Katalysators Vorschub geleistet. Im übrigen ist die zweckdienliche Anordnung eines pulverförmigen, zumindest feinteiligen Materials stets an Behältnisse gebunden und dadurch nicht montagefreundlich.

Der Erfindung liegt daher die Aufgabe zugrunde, einen Katalysator sowie ein Verfahren zu seiner Herstellung anzugeben, durch welches die erwähnten Nachteile beim Produkt weitgehend ausgeschlossen werden können.

Die Aufgabe wird erfindungsgemäß durch die im kennzeichnenden Teil des Anspruchs 1 genannten Maßnahmen gelöst.

Bei dem Katalysator gemäß der Erfindung handelt es sich um eine flexible Doppelfolie aus einem verdichteten PTFE-Aktivkohle-Gemisch, wobei das Mengenverhältnis der beiden Komponenten zwischen 40 : 60 Gew.-% und 10 : 90 Gew.-% schwanken kann, vorzugsweise jedoch etwa 25 : 75 Gew.-% beträgt.

Der Gehalt an aktivem katalytischen Material liegt bei 0,1 bis 5 Gew.-%, vorzugsweise bei 0,3 bis 1 Gew.-% Pd.

Die erfindungsgemäß mit der eigentlichen Katalysatormatte verbundene zweite Aktivkohlematte ist frei von katalytisch wirksamen Bestandteilen und kann jedoch mit Kupferoxid (CuO) imprägniert sein. Im übrigen besitzt diese zweite Matte die gleiche Zusammensetzung (Aktivkohle, PTFE, nachhydrophobiert) wie die erste katalytisch aktive Matte. Sie schützt den Katalysator vor dem in den Blei-Akkumulatorgasen enthaltenen, den Katalysator vergiftenden Antimonwasserstoff (SbH$_3$). Die zweite Kohlenmatte wirkt gleichzeitig als Diffusionssperre bei Überlastung des Rekombinatorstopfens durch ein zu hohes Gasangebot, bei dem die Rekombinationsrate bis weit unter 80% absinken kann.

Es wurde auch gefunden, daß gewalzte Katalysatorträger auf Aktivkohlebasis für sich allein keine genügende Funktionssicherheit gewährleisten, weil sie nach kurzer Berührungszeit mit Knallgas aufglimmen, dadurch zerstört werden und auch zu einer Explosion Anlaß geben können. Diese Gefahr wird durch die zweite Aktivkohlematte, die auf die erste Aktivkohlematte aufgewalzt ist, gebannt.

Entscheidenden Einfluß auf die Beschaffenheit der Katalysatormatten und ihren vorteilhaften Einsatz hat die Herstellungsweise gemäß der Erfindung, die im folgenden beschrieben wird.

10 bis 40 Gew.-% PTFE-Pulver, dessen mittlere Korngröße in weiten Grenzen des 10 μ — und 100 μ Bereichs schwanken kann, werden mit 90 bis 60 Gew.-% Aktivkohle einem intensiven Mischungsprozeß unterworfen, bei welchem die Teile durch Einwirkung starker mechanischer Schlagkräfte zerkleinert werden. Anschließend wird das Gemisch einer Vibration unterzogen und danach gewalzt. Durch die Vibrationsbehandlung wird der Neigung des Gemisches zum Verklumpen entgegengewirkt und damit eine gute Walzbarkeit ermöglicht. Sie kann beispielsweise auf einem Schwingtisch vorgenommen werden. Es ist auch möglich, das Gemisch über eine Vibrierrinne in den Walzenstuhl einlaufen zu lassen.

Das erhaltene Walzband wird nunmehr durch eine 1- bis 20%ige Palladiumchloridlösung gezogen, wobei die Verweilzeit mindestens 1 Minute beträgt, und anschließend mit Heißluft getrocknet.

Der nächste erfindungswesentliche Schritt besteht in einer Nachhydrophobierung der Walzband-Oberfläche mit Hilfe einer ca. 10 – 30%igen PTFE-Suspension durch Tauchen oder Einsprühen. Die Einwirkungszeit soll dabei weniger als 10 Sekunden betragen. Die kurze Zeit verhindert, daß die PTFE-Suspension zu stark in das Innere des Katalysatorträgers eindringt und auf der Oberfläche eine zu dicke Schicht gebildet wird, bei der die Gefahr besteht, daß sie beim Trocknen aufreißt und somit unwirksam wird.

Die richtige PTFE-Dosierung kann aber auch durch Einstellen einer entsprechenden Dispersionskonzentration erfolgen.

Das leicht angetrocknete und nicht mehr klebende Walzband kann nun durch Heißluft oder mittels IR-Heizung getrocknet werden. Danach soll das Walzband eine glatte, geschlossene, milchig-weiße PTFE-Schicht besitzen.

Letzter Schritt bei der Herstellung der Katalysatormatte ist die Aktivierung, die erfindungsgemäß durch einen sinterähnlichen Prozeß erfolgt. Bei diesem wird gemäß

$$PdCl_2 \xrightarrow[360°C]{N_2} Pd + Cl_2$$

aus dem Palladiumchlorid metallisches Palladium in feinst verteilter Form gebildet. Die feine Verteilung des Palladiumchlorids auf der großen Oberfläche der Aktivkohle stellt möglicherweise eine günstige Nebenbedingung für diesen Zerfallsprozeß dar.

Die Aktivierung geschieht beispielsweise in einem Rohrofen bei einer Temperatur zwischen 330 und 430°C, wobei die Verweilzeit je nach Temperatureinstellung 3 bis 30 Minuten betragen kann. Durch die Zersetzung des PdCl$_2$ wird die die Hydrophobierung bewirkende oberflächliche PTFE-Schicht aufgerissen.

Eine reduzierende Ofenatmosphäre ist für die Aktivierung der Katalysatormatte bzw. des Walzbandes nicht erforderlich. Die weiter oben angegebene Zerfallsreaktion verläuft auch in Luft, vorzugsweise jedoch unter strömendem Stickstoff. Der Stickstoffstrom muß so eingestellt sein, daß die entstehenden gasförmigen Zerfallsprodukte wie Cl$_2$, C$_2$F$_4$ oder Zersetzungsprodukte von Netzmitteln, die bei der Hydrophobierung aus der PTFE-Dispersion eingeschleppt wurden, abgeführt werden können.

Das fertig gesinterte und aktivierte Walzband wird nunmehr mit einem weiteren, kein Palladium enthaltendes Walzband, in engen mechanischen Kontakt gebracht. Dies kann beispielsweise durch Zusammenwalzen oder Vernieten geschehen.

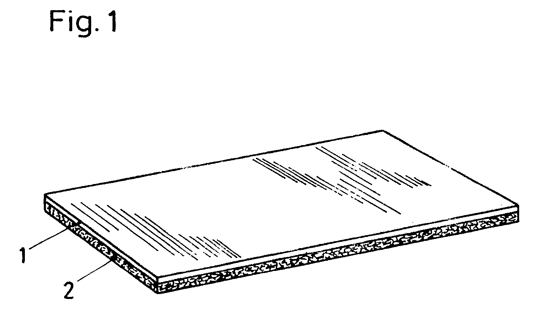

Figur 1 zeigt einen erfindungsgemäßen Katalysator, zusammengesetzt aus der eigentlichen Katalysatormatte 1 und der zusätzlichen Aktivkohlematte 2, die nicht mit Pd aktiviert ist, jedoch mit CuO imprägniert sein kann.

Der erfindungsgemäß hergestellte Katalysator besitzt eine gute mechanische Festigkeit und behält neben guter Katalysatorwirkung seine Hydrophobizität lange Zeit bei. Seine Oberfläche sollte schwarzglänzend sein und möglichst keine sichtbaren Risse zeigen. Der erfindungsgemäße Katalysator ist außer in Rekombinatoren für Akkumulatoren vielseitig verwendbar, nämlich in allen Anlagen, in denen Wasserstoff parasitär entsteht, beispielsweise in Brennstoffzellenanlagen zur Verbrennung von mit den Inertgasen ausgeblasenem Wasserstoff, in Batterieräumen von beispielsweise U-Booten, EDV-Anlagen oder auch Kleingeräten, wie z. B. elektrischen Zahnbürsten.

Er kann auch bei der Beseitigung von Radiolysegase in Kernkraftwerken oder zur Wärmeerzeugung aus Wasserstoff und Sauerstoff und Luft verwendet werden.

Schließlich kann aus Hydrierungs- und Reduktionsprozessen anfallender Wasserstoff mit Hilfe des Katalysators oxidiert werden, wobei man einer etwaigen Explosionsgefahr infolge Gasansammlungen entgegenwirkt. Die Reaktionswärme kann bei den nämlichen Prozessen zur Vorheizung dienen.

**Patentansprüche**

1. Katalysatormatte zur Rekombination von Wasserstoff und Sauerstoff, insbesondere der beim Betrieb elektrischer Akkumulatoren entstehenden Gase, hergestellt durch Tränken eines Trägermaterials aus Polytetrafluorethylen und Aktivkohle mit einem katalytisch aktiven Material und Walzen, dadurch gekennzeichnet, daß aus einer Polytetrafluorethylen-Aktivkohle-Mischung eine erste Matte gewalzt wird, daß die Matte mit der wäßrigen Lösung eines Salzes, dem ein katalytisch aktives Metall zugrundeliegt, getränkt wird, daß die Matte danach hydrophobiert und gesintert wird, und daß mit dieser Matte eine zweite, von katalytisch aktivem Material freie Aktivkohlematte in engen mechanischen Kontakt gebracht wird.

2. Katalysator nach Anspruch 1, dadurch gekennzeichnet, daß das Mischungsverhältnis Polytetrafluorethylen : Aktivkohle zwischen 40 : 60 Gew.-% und 10 : 90 Gew.-%, vorzugsweise 25 : 75 Gew.-% beträgt.

3. Katalysator nach den Ansprüchen 1 und 2, dadurch gekennzeichnet, daß die erste Matte 0,1 bis 5 Gew.-%, vorzugsweise 0,3 bis 1 Gew.-% Pd enthält.

4. Katalysator nach Anspruch 3, dadurch gekennzeichnet, daß die zweite, katalytisch nicht aktive Kohlematte mit Kupferoxid imprägniert ist.

5. Verfahren zur Herstellung eines Katalysators nach einem der Ansprüche 1 bis 4, dadurch gekennzeichnet, daß die Polytetrafluorethylen-Aktivkohle-Mischung zu einer Matte gewalzt wird, daß die Matte mit einer Palladiumchlorid-Lösung getränkt wird und nach Zwischentrocknung in eine wäßrige Polytetrafluorethylen-Dispersion getaucht wird, daß nach erneutem Zwischentrocknen die Matte einer Sinterung in einer indifferenten oder reduzierenden Ofenatmosphäre unterworfen wird, daß eine zweite Matte ohne PdCl$_2$-Tränkung hergestellt wird und daß beide Matten in engen mechanischen Kontakt gebracht werden.

6. Verfahren nach Anspruch 5, dadurch gekennzeichnet, daß die Polytetrafluorethylen-Aktivkohle-Mischung zur Erzielung einer gleichmäßigen Verteilung unter Vibration auf die Walze aufgebracht wird.

7. Verfahren nach den Ansprüchen 5 und 6, dadurch gekennzeichnet, daß das Walzprodukt mindestens 1 Minute mit einer 0,1--20%igen PdCl$_2$-Lösung getränkt wird.

8. Verfahren nach den Ansprüchen 5 bis 7, dadurch gekennzeichnet, daß die getränkte Matte nach der ersten Zwischentrocknung weniger als 10 sec. durch Tauchen in oder Besprühen mit einer wäßrigen Polytetrafluorethylen-Dispersion behandelt wird.

9. Verfahren nach den Ansprüchen 5 bis 8, dadurch gekennzeichnet, daß die Sintertemperatur zwischen 330 und 430°C liegt und die Ofenatmosphäre aus Stickstoff besteht.

## Claims

1. Catalyst mat for recombination of hydrogen and oxygen, especially recombination of the gases formed during the operation of electric batteries, produced by impregnating a carrier material of polytetrafluoroethylene and activated charcoal with a catalytically active material and rolling, characterised in that a first mat is rolled from a polytetrafluoroethylene-activated charcoal mixture, that the mat is impregnated with the aqueous solution of a salt forming the basis of a catalytically active metal, that the mat is then rendered hydrophobic and is sintered, and that a second activated charcoal mat, free from catalytically active material, is then brought into close mechanical contact with this mat.

2. Catalyst according to Claim 1, characterised in that the polytetrafluoroethylene : activated charcoal mixing ratio is between 40 : 60% by wt., preferably 25 : 75% by wt.

3. Catalyst according to Claims 1 and 2, characterised in that the first mat contains 0.1 to 5% by wt., preferably 0.3 to 1% by wt. Pd.

4. Catalyst according to Claim 3, characterised in that the second, catalytically non-active charcoal mat is impregnated with copper oxide.

5. Method for producing a catalyst according to one of Claims 1 to 4, characterised in that the polytetrafluoroethylene-activated charcoal mixture is rolled into a mat, that the mat is impregnated with a palladium chloride solution and is dipped, after intermediate drying, in an aqueous polytetrafluoroethylene dispersion, that the mat is subjected after renewed intermediate drying to sintering in an inert or reducing furnace atmosphere, that a second mat is produced without PdCl$_2$-impregnation, and that both mats are then brought into close mechanical contact.

6. Method according to Claim 5, characterised in that the polytetrafluoroethylene-activated charcoal mixture is applied to the roller under vibration conditions in order to achieve a uniform distribution.

7. Method according to Claims 5 and 6, characterised in that the rolled product is impregnated for at least 1 minute with a 0.1--20% PdCl$_2$ solution.

8. Method according to Claims 5 to 7, characterised in that the impregnated mat is treated after the first intermediate drying for less than 10 seconds by immersion in or spraying with an aqueous polytetrafluoroethylene dispersion.

9. Method according to Claims 5 to 8, characterised in that the sintering temperature is between 330 and 430°C and the furnace atmosphere consists of nitrogen.

## Revendications

1. Natte de catalyseur pour la recombinaison d'hydrogène et d'oxygène, notamment des gaz prenant naissance lors du fontionnement des accumulateurs électriques, natte réalisée par imbibition d'un matériau de support en polytétrafluoréthylène et charbon actif avec un matériau catalytiquement actif, et par laminage, natte de catalyseur caractérisée en ce que, à partir d'un mélange de polytétrafluoréthylène et de charbon actif, une première natte est laminée, cette natte est imbibée avec la solution aqueuse d'un sel à la base duquel est un métal catalytiquement actif, cette natte est ensuite hydrofugée et frittée, puis une seconde natte de charbon actif exempte de matériaux catalytiquement actifs, est amenée en contact mécanique étroit avec cette première natte.

2. Catalyseur selon la revendication 1, caractérisé en ce que le rapport du mélange polytétrafluoréthylène charbon actif se situe entre 40 : 60% en poids, et 10 : 90% en poids, et est de préférence de 25 : 75% en poids.

3. Catalyseur selon les revendications 1 et 2, caractérisé en ce que la première natte contient 0,1 à 5% en poids de palladium, de préférence 0,3 à 1% en poids.

4. Catalyseur selon la revendication 3, caractérisé en ce que la seconde natte de charbon, non active catalytiquement, est imprégnée d'oxyde de cuivre.

5. Procédé pour la réalisation d'un catalyseur selon une des revendications 1 à 4, caractérisé en ce que le mélange polytétrafluoréthylène-charbon actif est laminé pour constituer une natte, en ce que cette natte est imbibée d'une solution de chlorure de palladium et après un séchage intermédiaire est plongée dans une dispersion aqueuse de polytétrafluoréthylène, en ce que, après un nouveau séchage intermédiaire, cette natte est soumise à un frittage dans une atmosphère de four indifférente ou réductrice, en ce que, une seconde natte sans imbition de chlorure de palladium est fabriquée et en ce que les deux nattes sont amenées en étroit contact mécanique.

6. Procédé selon la revendication 5, caractérisé en ce que le mélange polytétrafluoréthylène-charbon actif, pour obtenir une répartition uniforme, est amené sous vibration au laminoir.

7. Procédé selon les revendications 5 et 6, caractérisé en ce que le produit du laminage est imbibé pendant au moins une minute avec une solution de chlorure de palladium d'une concentration de 0,1 à 20%.

8. Procédé selon les revendications 5 à 7, caractérisé en ce que la natte imbibée, après le premier séchage intermédiaire, est traitée pendant moins de 10 secondes avec une dispersion aqueuse de polytétrafluoréthylène, par immersion ou par pulvérisation.

9. Procédé selon les revendications 5 à 8, caractérisé en ce que la température de frittage se situe entre 330 et 430°C et que l'atmosphère du four est constituée par de l'azote.

Fig. 1